# EUROPEAN PATENT APPLICATION

(11) **EP 4 557 761 A1**
(43) Date of publication of application: **21.05.2025**
(21) Application number: 23853945.6
(22) Date of filing: 27.04.2023
(51) Int. Cl.: H04Q 11/00, H04J 14/00

(54) **DOWNLINK FRAME LENGTH PROCESSING METHOD AND APPARATUS, AND STORAGE MEDIUM AND ELECTRONIC APPARATUS**

(30) Priority: 16.08.2022 CN 202210984160
(71) Applicant: ZTE CORPORATION, Shenzhen, Guangdong 518057 (CN)
(72) Inventor: WANG, Peng, Shenzhen, Guangdong 518057 (CN); YANG, Qiaoshun, Shenzhen, Guangdong 518057 (CN); CAI, Liyong, Shenzhen, Guangdong 518057 (CN)
(74) Representative: Chimini, Francesco
(86) International application number: PCT/CN2023/091307
(87) International publication number: WO 2024/037038

(57) **Abstract**

Embodiments of the present invention provide a downlink frame length processing method and apparatus, a storage medium, and an electronic apparatus. The above method includes: compressing, by an optical gateway, the downlink frame length according to target parameters, wherein the target parameters include at least one of the following: a service type of the optical router and a parameter for determining centralized scheduling; and sending, by the optical gateway, the compressed downlink frame length to the optical router. By means of the present invention, the problem in the related art that the optical gateway cannot compress the downlink frame length is solved, and the technical effect of compressing the downlink frame length is achieved.

## Description

The present invention is based upon and claims priority to Chinese patent application filed with the China Patent Office on August 16, 2022, with an application number of 202210984160.9 and entitled "Downlink Frame Length Processing Method and Apparatus, Storage Medium, and Electronic Apparatus", the contents of which are incorporated herein by reference in its entirety.

### Technical Field

Embodiments of the present invention relate to the field of communications, in particular to downlink frame length processing method and apparatus, and a storage medium and an electronic apparatus.

### Background

With continuous development of optical networks, bandwidth network services are moving into the fifth generation fixed communication (F5G) era dominated by 10G PON (Passive Optical Network) and Wi-Fi 6 (formerly known as IEEE 802.11.ax, the sixth generation wireless network technology). Compared with previous generations of fixed access technologies, F5G possesses a series of excellent properties including ultra-high network access rates, full-fiber connection, and excellent network experience. On the basis of fiber to the home, a F5G home private network extends fibers to rooms, achieves all-optical networking in the home, and realizes whole-house gigabit coverage in combination with the 10G PON (Passive Optical Network) and the Wi-Fi 6 technology, thereby solving such problems as insufficient signal coverage and substandard rates of home Wi-Fi, and achieving safe and reliable gigabit coverage throughout the house.

The all-optical network FTTR (Fiber To The Room) is divided into two technical solutions: P2P (Point to Point) and P2MP (Point to Multi Point). The P2MP networking method is as follows: an uplink optical port of a P2MP optical gateway is generally a 10G PON, and a downlink optical port may be a GPON (Gigabit-Capable PON, a broadband passive optical integrated access technology based on the ITU-TG.984.x standard) or a 10G PON, and an optical router is attached to an optical splitter for networking. The P2MP technical solution has advantages of many attached devices and convenient expansion, with single-point velocity measurement exceeding Gigabit.

The P2MP technology currently reuses GPON series standards, such as GPON standard G.984.3, XGPON standard G.987.3, and the XGSPON standard G. 9807.1, and may reuse the 50GPON standard G. 9804.2 in the future. In the GPON series standards, the downlink frame length is fixed at 125 us, while the uplink is burst according to a BWMap domain, that is, the scheduling cycle of the uplink DBA (Dynamic Bandwidth Assignment) is 125 us to the minimum, as shown in Table 1. Table 1 provides such data as uplink rates and downlink frame lengths under the above standards, which may not be applicable to some scenarios with higher requirements on latency. For example, when the P2MP optical gateway centrally schedules wireless resources or cache resources of the optical router, the latency generally needs to be less than 125 us, since an excessive latency will lead to packet loss as the wireless resources or cache resources of the optical router cannot be timely scheduled, thereby leading to loss of valid data of users and deteriorated service experience.

**Table 1**

| | Downlink rate | Uplink rate | Downlink frame length | DBA scheduling cycle |
|---|---|---|---|---|
| G. 984.3 Standard | 2.5 Gbps | 1.25/2.5 Gbps | 125 us | 125 us |
| G. 987.3 Standard | 10 Gbps | 2.5 Gbps | 125 us | 125 us |
| G. 9807.1 Standard | 10 Gbps | 10 Gbps | 125 us | 125 us |
| G. 9804.2 Standard | 50 Gbps | 25/50 Gbps | 125 us | 125 us |

No effective solution has been provided yet in the prior art aiming at the problem in the related art that the optical gateway cannot compress the downlink frame length.

### Summary

Embodiments of the present invention provide a downlink frame length processing method and apparatus, and a storage medium and an electronic apparatus, to at least solve the problem in the related art that the optical gateway cannot compress the downlink frame length.

According to an embodiment of the present invention, a downlink frame length processing method is provided, including: compressing, by an optical gateway, the downlink frame length according to target parameters, wherein the target parameters include at least one of the following: a service type of the optical router and a parameter for determining centralized scheduling; and sending, by the optical gateway, the compressed downlink frame length to the optical router.

According to another embodiment of the present invention, when applicable to an optical gateway, a downlink frame length processing apparatus is further provided. The downlink frame length processing apparatus includes: a compression module configured to enable the optical gateway to compress the downlink frame length according to target parameters, wherein, the target parameters include at least one of the following: the service type of the optical router and the parameter for determining centralized scheduling; and a sending module configured to enable the optical gateway to send the compressed downlink frame length to the optical router.

According to still another embodiment of the present invention, a computer-readable storage medium is further provided. A computer program is stored in the computer-readable storage medium, wherein the computer program is configured to execute the steps in any of the above method embodiments when running.

According to yet another embodiment of the present invention, an electronic apparatus is further provided, including a memory and a processor, wherein a computer program is stored in the memory, and the processor is configured to run the computer program to perform the steps in any of the above method embodiments.

Through the present invention, the optical gateway compresses the downlink frame length according to target parameters, wherein the target parameters include at least one of the service type of the optical router and a parameter of the optical router for determining centralized scheduling, to obtain a compressed downlink frame length. Finally, the optical gateway sends the compressed downlink frame length to the optical router. When the above solution is adopted, the problem in the related art that the optical gateway cannot compress the downlink frame length is solved, and the technical effect of compressing the downlink frame length is achieved.

### Brief Description of the Drawings

Fig. 1 is a hardware structure block diagram of a computer terminal of a downlink frame length processing method according to an embodiment of the present invention;
Fig. 2 is a flow chart of a downlink frame length processing method according to an embodiment of the present invention;
Fig. 3 is a schematic diagram of an optional downlink frame length adjustment in the G.984.3 standard according to an embodiment of the present invention;
Fig. 4 is a schematic diagram of another optional downlink frame length adjustment in the G.984.3 standard according to an embodiment of the present invention;
Fig. 5 is a schematic diagram of an optional downlink frame length adjustment in the G.987.3/G.9807.1/G.9804.2 standards according to an embodiment of the present invention;
Fig. 6 is a schematic diagram of another optional downlink frame length adjustment in the G.987.3/G.9807.1/G.9804.2 standards according to an embodiment of the present invention;
Fig. 7 is a schematic diagram of an optional downlink frame length notification method in the G.984.3 standard according to an embodiment of the present invention;
Fig. 8 is a schematic diagram of another optional downlink frame length notification method in the G.987.3/G.9807.1/G.9804.2 standards according to an embodiment of the present invention;
Fig. 9 is a schematic diagram of an optional all-optical network low-latency communication method according to an embodiment of the present invention;
Fig. 10 is a structural block diagram of an optional downlink frame length processing method according to an embodiment of the present invention.

### Detailed Description of the Embodiments

Embodiments of the present invention will be described in detail below with reference to the accompanying drawings and in combination with embodiments.

It should be noted that the terms "first", "second" and the like in the description, claims and the above drawings of the present invention are used to distinguish similar objects and are not necessarily used to describe a specific order or sequence.

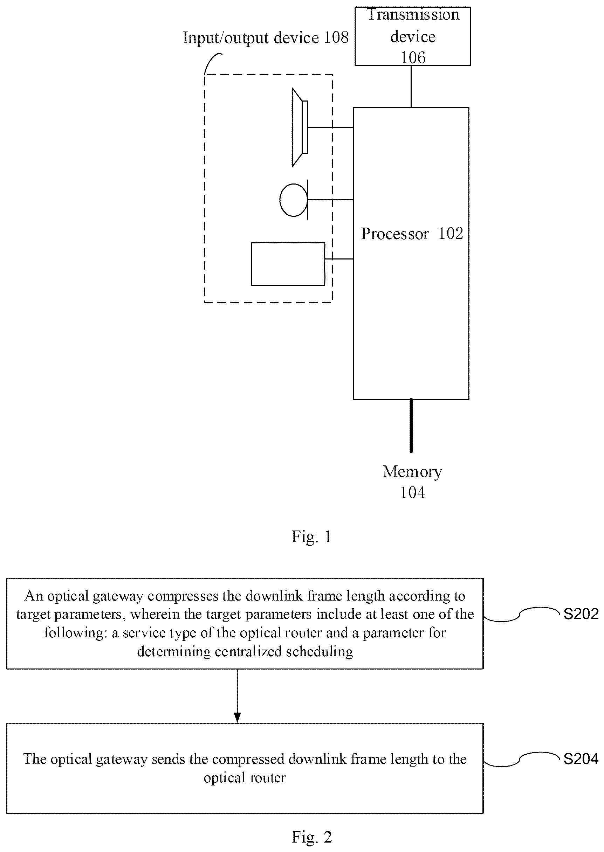

The method embodiments provided in the embodiments of the present invention can be performed in a computer terminal or similar computing apparatus. Taking running on a computer terminal as an example, Fig. 1 is a hardware structure block diagram of a computer terminal of a downlink frame length processing method according to an embodiment of the present invention. As shown in Fig. 1, the computer terminal may include one or more (only one is shown in Fig. 1) processors 102 (the processor 102 may include but is not limited to a processing apparatus such as a microprocessor MCU or a programmable logic device FPGA) and memories 104 configured to store data, wherein the above computer terminal may also include a transmission device 106 for communication functions and an input/output device 108. Those skilled in the art can understand that the structure shown in Fig. 1 is merely illustrative, and does not limit the structure of the above computer terminal. For example, the computer terminal may also include more or fewer components than shown in Fig. 1, or may be configured differently from the configuration shown in Fig. 1.

The memory 104 may be configured to store computer programs, for example, software programs and modules of application software, such as the computer programs corresponding to the downlink frame length processing method in the embodiment of the present invention. The processor 102 runs the computer programs stored in the memory 104 to execute various functional applications and data processing, that is, implementing the above method. The memory 104 may include a high-speed random access memory, and may also include a non-volatile memory, such as one or more magnetic storage devices, a flash memory, or other non-volatile solid-state memories. In some embodiments, the memory 104 may further include a memory arranged remotely relative to the processor 102, and these remote memories may be connected to the computer terminal through a network. Examples of the above networks include but are not limited to the Internet, intranets, local area networks, mobile communication networks and combinations thereof.

The transmission device 106 is configured to receive or send data via a network. Specific examples of the above network may include a wireless network provided by a communication provider of the computer terminal. In one example, the transmission device 106 includes a network adapter (Network Interface Controller, NIC for short), and the network adapter can be connected to other network devices through a base station so as to communicate with the Internet. In one example, the transmission device 106 may be a radio frequency (RF for short) module, and the radio frequency module is configured to communicate with the Internet wirelessly.

The present embodiment provides a downlink frame length processing method running on the above computer terminal. Fig. 2 is a flow chart of the downlink frame length processing method according to an embodiment of the present invention. As shown in Fig. 2, the process includes the following steps:
At S202: compressing, by an optical gateway, the downlink frame length according to target parameters, wherein the target parameters include at least one of the following: a service type of the optical router and a parameter for determining centralized scheduling;
At S204: sending, by the optical gateway, the compressed downlink frame length to the optical router.

It should be noted that in FTTR home or enterprise networking, the optical gateway is generally attached with multiple optical routers, and the downlink optical port may be a GPON (Gigabit-Capable PON, a broadband passive optical integrated access technology based on the ITU-TG.984.x standard) or a 10G PON, and may evolve to 50G PON in the future, but the downlink frame length is generally fixed at 125 us, and management messages of the downlink PLOAM (Physical Layer Operations, Administration and Maintenance) or OMCI (ONU Management and Control Interface) and a reduction in the scheduling cycle latency of the DBA (Dynamic Bandwidth Allocation) cannot be achieved, so the downlink frame length needs to be compressed, so as to achieve low-latency communication at the downlink optical port and adapt to low-latency service scenarios.

It should be noted that during the above process of compressing the downlink frame length, as to the downlink frame length, the compressed header remains unchanged, and the downlink frame length latency is reduced by compressing a frame payload. For example, the downlink frame of the G.984.3 standard includes a PCBd domain and a GTC payload domain, the PCBd domain remains unchanged, and the GTC payload is compressed to reduce downlink frame latency; and the downlink frame of the G.987.3 standard, G.9807.1 standard and G.9804.2 standard includes a PSBd domain and a PHY payload domain, the PHY payload domain contains the XGTC/FS header domain and the XGTC/FS payload domain. The PSBd domain and the XGTC/FS header domain remain unchanged, while the XGTC/FS payload is compressed to reduce the downlink frame latency.

Wherein, the PCBd domain is a field in the frame data and is typically used by switches or routers to determine a target processor board for operation when data packets are forwarded on an Ethernet network. The PSBd domain represents a starting boundary delimiter of a data packet. For the frame data that is divided into multiple small data packets to optimize transmission and save bandwidth, the PSBd domain identifies a starting position of each small data packet, such that the receiver can correctly assemble the complete frame data according to the information. The PHY payload domain is a physical layer responsible for transmitting user data. The XGTC/FS header domain represents the downlink control information and frame header part, and includes synchronization sequence, channel coding method and other information; and the XGTC/FS payload domain represents the actual uplink data or downlink data.

Through the above steps, the optical gateway compresses the downlink frame length according to target parameters, wherein the target parameters include at least one of the service type of the optical router and a parameter of the optical router for determining centralized scheduling, to obtain the compressed downlink frame length, and finally, the optical gateway sends the compressed downlink frame length to the optical router. When the above solution is adopted, the problem in the related art that the optical gateway cannot compress the downlink frame length is solved, and the technical effect of compressing the downlink frame length is achieved.

In an embodiment, the parameter for determining centralized scheduling includes: wireless resources or cache resources of the optical router. Before performing the above compression S204 of compressing, by the optical gateway, the downlink frame length according to the target parameters, the method further includes at least one of the following: determining, by the optical gateway, the service type of the optical router according to the type of the message protocol sent by the optical router; and determining, by the optical gateway, the wireless resources or cache resources of the optical router according to physical layer operations, administration and maintenance (PLOAM) message or ONU management and control interface (OMCI) message.

The optical gateway may identify the service type of the optical router through the type of the message protocol sent by the optical router. For example, in a case that the optical router sends a HART (Highway Addressable Remote Transducer) message, the optical gateway can identify that the user is performing VR interaction through the optical router; in a case that an optical router sends a multicast join message, the optical gateway can identify that the user is watching an IPTV (Interactive Internet Television) video through the optical router; in a case that the optical router sends a SIP (Session Initiation Protocol) message, the optical gateway can identify that the user is making a voice call through the optical router. The optical gateway can also acquire parameters of the optical router for determining centralized scheduling through interaction between the PLOAM message and the OMCI message, that is, acquiring the wireless resources or cache resources of the optical router.

In an embodiment, the above compression S204 of compressing, by the optical gateway, the downlink frame length according to the target parameters may be achieved through the following steps: compressing, by the optical gateway, the downlink frame length to a first length range when the service type of the optical router is a latency-sensitive service.

The optical gateway dynamically adjusts the downlink frame length according to the service type of the optical router and the parameter for determining centralized scheduling. The parameter for determining centralized scheduling includes the wireless resources or cache resources of the optical router. For example, when the optical gateway identifies that the router has a latency-sensitive service, and in a case that the latency-sensitive service requires a latency of less than 80 us, then the optical gateway can adjust the downlink frame length to a first length range, such as 62.5 us, or shorter to adapt to the service scenario.

In an embodiment, the parameter for determining centralized scheduling includes: wireless resources or cache resources of the optical router. The above compression S204 of compressing, by the optical gateway, the downlink frame length according to the target parameters can be further achieved through the following step: adjusting, by the optical gateway, the downlink frame length to a second length range when the wireless resources or cache resources of the optical router need to be scheduled centrally.

In a case that the optical gateway needs to centrally schedule the wireless resources and cache resources of the optical router, and the latency of centralized scheduling is required to be less than 20 us, then the optical gateway can adjust the downlink frame length to the second length range, such as 15.625 us or shorter, to perform centralized scheduling and management of optical router resources.

It should be noted that in the above solution, in a case that the optical gateway identifies that the optical router has no latency-sensitive service or does not need to centrally schedule optical router resources, the downlink frame length can be restored to 125 us.

Based on the above steps, the above compression S204 of sending, by the optical gateway, the compressed downlink frame length to the optical router includes the following step: sending, by the optical gateway, the compressed downlink frame length to the optical router through a target message, to instruct the optical router to de-frame the target message, so as to obtain the compressed downlink frame length; wherein the target message includes one of the following: PLend field of the standard downlink frame, PON-ID field of the downlink frame, physical layer operations, administration and maintenance (PLOAM) message, and ONU management and control interface (OMCI) message.

The optical router searches the downlink frame synchronization domain for downlink frame synchronization. After synchronization, the compressed frame length information of the downlink frame may be acquired according to the frame length of the PLend field or the PON-ID field of the downlink frame header, and the GTC payload domain or the XGTC/FS payload domain is de-framed and recombined according to the frame length information, meanwhile, uplink burst control is performed according to the BWmap domain bandwidth information; and the compressed frame length information of the downlink frame and the superframe count information of switching of the downlink frame length can also be acquired according to the PLOAM or OMCI management message. When the superframe count time is reached, a master gateway and a slave gateway simultaneously switch the downlink frame lengths and the downlink frame de-framing algorithms.

In an embodiment, the method further includes: when the target message includes the PLend field of the standard downlink frame, indicating the compressed downlink frame length through the ATM length indicating bit in the PLend field of the standard downlink frame.

The optical gateway can notify the optical router of the adjusted downlink frame length, that is, the compressed downlink frame length, through the ATM length in the PLend field of the downlink frame of the G984.3 standard.

Wherein, the PLend field represents an end position of the Payload, that is, by specifying an end bit of the data packet with different types and lengths, a receiving end is indicated when to stop reading the transmission and start to process the next data packet.

In an embodiment, the method further includes: when the target message includes the PON-ID field of the downlink frame, indicating the compressed downlink frame length through an Admintive label indicating bit in the PON-ID field of the downlink frame.

The optical gateway can also notify the optical router of the adjusted downlink frame length, that is, the compressed downlink frame length, through the Admintive label in the PON-ID field of the downlink frame of the G987.3 standard, G9807.1 standard, and G9804.2 standard.

It should be noted that the above method of notifying the optical router of the compressed downlink frame length may further include: notifying the optical router of the adjusted downlink frame length through a PLOAM message or an OMCI message; however, notification through the PLOAM message or the OMCI message needs a longer time, and meanwhile, the slave gateway needs to be informed of the superframe count value to which the downlink frame length is adjusted and by which the downlink frame length is switched.

In an embodiment, the above compression S204 of compressing, by the optical gateway, the downlink frame length according to target parameters include at least one of the following: compressing the downlink frame length according to a preset ratio; and compressing the downlink frame length according to the application scenario.

The downlink frame can be compressed proportionally or can be compressed by selecting a compression algorithm according to the application scenario. For example, a 125 us downlink frame can be divided into n subframes, and the frame length of each subframe after proportional compression is 125/n (us). When n is equal to 8, the subframe length 125/8 is equal to 15.625 us, the DBA scheduling cycle is 12.5 us to the minimum; each subframe can also be compressed not proportionally, and can be designed according to the actual application scenario. For example, the frame length n1 (us) of the first subframe after compression, the frame length n2 (us) of the second subframe after compression......, n1+n2+...is equal to 125 us, and when n is equal to 8, the frame lengths of the subframes can be as follows: n1 = 12 us, n2= 13 us, n3=14 us, n4= 15 us, n5=16 us, n6=17 us, n7 = 18 us, n8 = 20 us or other combinations, and the DBA scheduling cycle matches with the compressed frame length.

In an embodiment, the above compression S204 of compressing, by the optical gateway, the downlink frame length according to target parameters include: for a standard downlink frame including the PCBd domain and the GTC payload domain, the optical gateway keeps the PCBd domain unchanged and compresses the GTC payload domain.

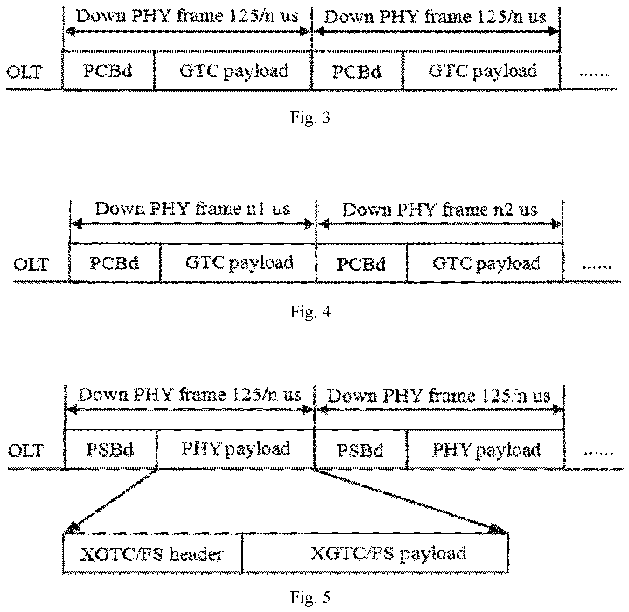

Embodiment 1 is explained below with reference to Fig. 3 and Fig. 4. Fig. 3 is a schematic diagram of an optional downlink frame length adjustment in the G.984.3 standard according to an embodiment of the present invention. Fig. 4 is a schematic diagram of another optional downlink frame length adjustment in the G.984.3 standard according to an embodiment of the present invention.

As shown in Fig. 3, the downlink frame of the G.984.3 standard includes the PCBd domain and the GTC payload domain, the PCBd domain remains unchanged when the downlink frame length is compressed, and the GTC payload domain is compressed to reduce the downlink frame latency. The compression algorithm is proportional compression, and the compressed frame length is 125/n (us).

As shown in Fig. 4, the downlink frame of the G.984.3 standard includes the PCBd domain and the GTC payload domain, wherein the PCBd domain remains unchanged when the downlink frame length is compressed, and the GTC payload domain is compressed to reduce the downlink frame latency. The compression algorithm is designed according to actual application scenarios, and the compressed frame length is n1 (us), n2 (us), etc.

That is, the above solution is based on the adjustment method of the downlink frame length of the G.984.3 standard, and Fig. 3 and Fig. 4 show a schematic diagram of adjustment through compression according to proportions and a schematic diagram of adjustment through selection of compression algorithms according to application scenarios, respectively.

In an embodiment, the above compression S204 of compressing, by the optical gateway, the downlink frame length according to target parameters includes: for the standard downlink frames including the PSBd domain, the first XGTC/FS header domain and the second XGTC/FS payload domain, keeping, by the optical gateway, the PSBd domain and the first XGTC/FS header domain unchanged, and compressing the second XGTC/FS payload domain.

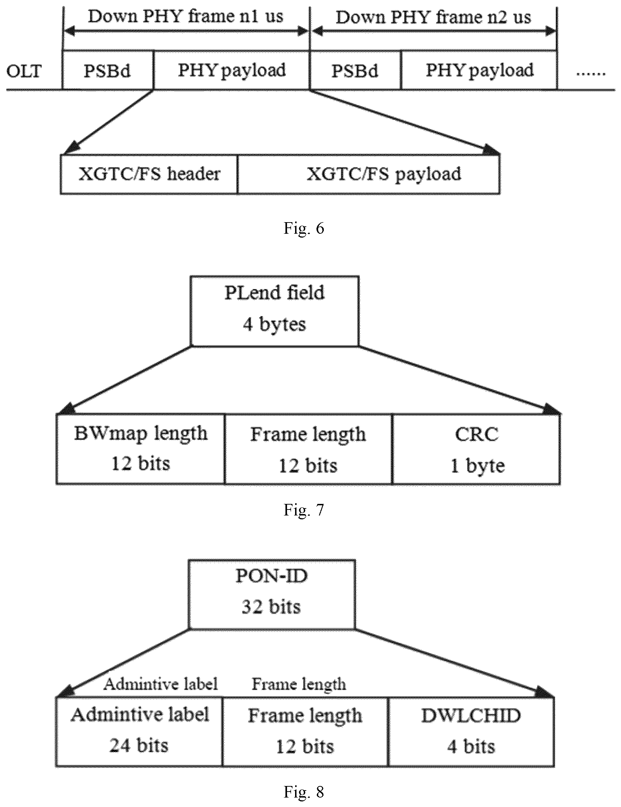

Fig. 5 and Fig. 6 are combined for illustration below. Fig. 5 is a schematic diagram of an optional downlink frame length adjustment in the G.987.3/G.9807.1/G.9804.2 standards according to an embodiment of the present invention. Fig. 6 is a schematic diagram of another optional downlink frame length adjustment in the G.987.3/G.9807.1/G.9804.2 standards according to an embodiment of the present invention.

As shown in Fig. 5, the downlink frame of the G.987.3/G.9807.1/G.9804.2 standards includes the PSBd domain, the XGTC/FS header domain and the XGTC/FS payload domain. The PSBd domain and XGTC/FS header domain remain unchanged when the downlink frame length is compressed. The XGTC/FS payload domain is compressed to reduce the downlink frame latency. The compression algorithm is proportional compression, and the compressed frame length is 125/n (us).

As shown in Fig. 6, the downlink frame of the G.987.3/G.9807.1/G.9804.2 standards includes the PSBd domain, the XGTC/FS header domain and the XGTC/FS payload domain. The PSBd domain and the XGTC/FS header domain remain unchanged when the downlink frame length is compressed. The XGTC/FS payload domain is compressed to reduce the downlink frame latency. The compression algorithm is designed according to actual application scenarios, and the compressed frame length is n1 (us), n2 (us), etc.

The above is based on the adjustment method of the downlink frame length of the G.987.3/G.9807.1/G.9804.2 standards, and Fig. 5 and Fig. 6 show a schematic diagram of adjustment through compression according to proportions and a schematic diagram of adjustment through selection of compression algorithms according to application scenarios, respectively.

The embodiment of the present invention further provides an optional downlink frame length notification method, as shown in Fig. 7. Fig. 7 is a schematic diagram of an optional downlink frame length notification method in the G.984.3 standard according to the embodiment of the present invention.

It can be seen that the PLend field of the G.984.3 standard includes a BWmap length indicating bit, an ATM length indicating bit and a CRC check bit, wherein the ATM length indicating bit is replaced by the downlink frame length indicating bit, that is, Frame length, which is used to notify the optical router of the downlink frame length information.

In addition, the embodiment of the present invention further provides a schematic diagram of another optional downlink frame length notification method, as shown in Fig. 8. Fig. 8 is another optional downlink frame length notification method in the G.987.3/G.9807.1/G.9804.2 standards according to the embodiment of the present invention.

It can be seen that the PON-ID field of the G.987.3/G.9807.1/G.9804.2 standards includes an Admintive label indicating bit and a DWLCHID indicating bit, wherein the Admintive label is shortened from 36 bits to 24 bits, and the downlink frame length indicating bit, namely, Frame length, is inserted, to notify the optical router of the downlink frame length information.

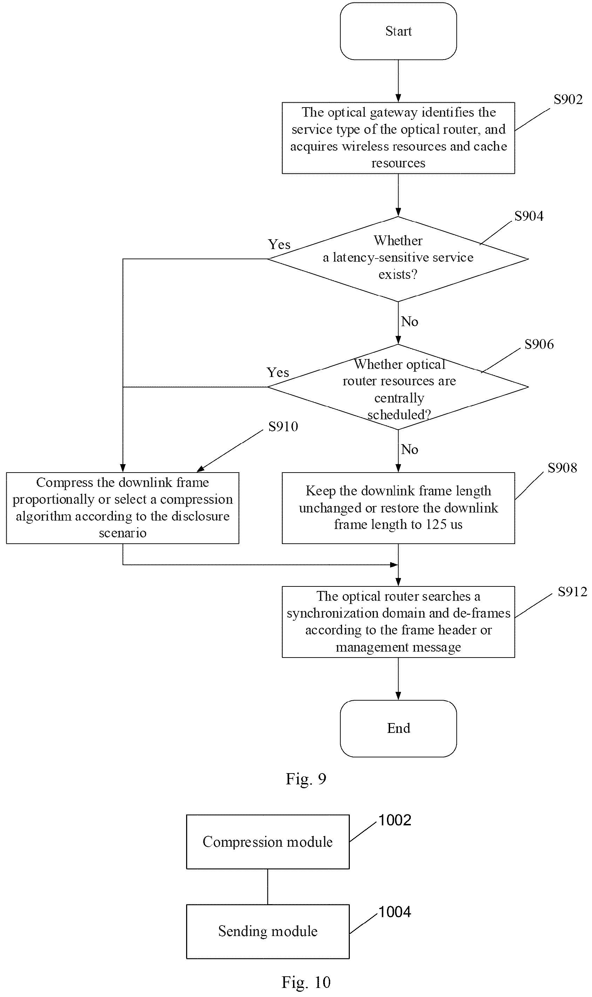

Fig. 9 is a schematic diagram of an optional all-optical network low-latency communication method according to an embodiment of the present invention. As shown in Fig. 9, the method includes the following steps:
At S902: identifying, by the optical gateway, the service type of the optical router, and acquiring wireless resources and cache resources;
At S904: judging whether a latency-sensitive service exists, if so, proceeding to S910, otherwise, proceeding to S906;
At S906: judging whether centralized scheduling of optical router resources is required, if so, proceeding to S910, otherwise, proceeding to S908;
At S908: keeping, by the optical gateway, the downlink frame length unchanged or restoring the downlink frame length to 125 us;
At S910: compressing, by the optical gateway, the downlink frame proportionally or selecting a compression algorithm according to the application scenario; and
At S912: searching, by the optical router, a synchronization domain and de-framing according to the frame header or management message.

Through the above steps, the optical gateway firstly identifies the service type of the optical router and acquires wireless resources and cache resources; the optical gateway identifies whether a latency-sensitive service exists in the optical router, if so, then the optical gateway compresses the downlink frame proportionally or selects a compression algorithm according to the application scenario, otherwise, whether the wireless resources and cache resources of the optical router need to be centrally scheduled by the optical gateway is judged; if so, the optical gateway compresses the downlink frame proportionally or selects a compression algorithm according to the application scenario, otherwise, the optical gateway keeps the downlink frame length unchanged or restores the downlink frame length to 125 us; and finally, the optical router searches a synchronization domain and de-frames according to the frame header or the management message. When the above solution is adopted, the problem in the related art that the optical gateway cannot compress the downlink frame length is solved, and the technical effect of compressing the downlink frame length is achieved.

Through a description of the above embodiments, those skilled in the art may clearly understand that the method according to the above embodiments may be implemented by means of software plus necessary general hardware platforms. Of course, the method may also be implemented by hardware, but in many cases the former is a better implementation. Based on such understanding, the technical solution of the present invention may be embodied essentially or in part as a contribution to the prior art in the form of a software product, and the computer software product is stored in a storage medium (e.g., ROM/RAM, disk, CD-ROM) that includes a number of instructions to enable a second node device (which may be a mobile phone, a computer, a server, or a network device, etc.) to perform a method described in various embodiments of the present invention.

The present embodiment further provides an downlink frame length processing apparatus, and the apparatus is configured to implement the above embodiments and preferred implementations, which has already been described and will not be repeated redundantly herein. As used below, the term "module" may be a combination of software and/or hardware that implements a predetermined function. Although the apparatus described in the following embodiments is preferably implemented in software, however, implementation in hardware, or a combination of software and hardware, is also possible and contemplated.

Fig. 10 is a structural block diagram of an optional downlink frame length processing apparatus according to an embodiment of the present invention. As shown in Fig. 10, the apparatus includes:
a compression module 1002 configured to enable the optical gateway to compress the downlink frame length according to target parameters, wherein the target parameters include at least one of the following: the service type of the optical router, and a parameter for determining centralized scheduling; and
a sending module 1004 configured to enable the optical gateway to send the compressed downlink frame length to the optical router.

Through the above modules, the optical gateway compresses the downlink frame length according to the target parameters, wherein the target parameters include at least one of the service type of the optical router and the parameter of the optical router for determining centralized scheduling, to obtain the compressed downlink frame length, and finally, the optical gateway sends the compressed downlink frame length to the optical router. When the above solution is adopted, the problem in the related art that the optical gateway cannot compress the downlink frame length is solved, and the technical effect of compressing the downlink frame length is achieved.

In an embodiment, the above compression module 1002 is further configured to perform at least one of the following methods before the optical gateway compresses the downlink frame length according to target parameters: determining, by the optical gateway, the service type of the optical router according to the type of the message protocol sent by the optical router; and determining, by the optical gateway, the wireless resources or cache resources of the optical router according to the physical layer operations, administration and maintenance (PLOAM) message or ONU management and control interface (OMCI) message.

The optical gateway may identify the service type of the optical router through the type of the message protocol sent by the optical router. For example, in a case that the optical router sends a HART (Highway Addressable Remote Transducer) message, the optical gateway can identify that the user is performing VR interaction through the optical router; in a case that an optical router sends a multicast join message, the optical gateway can identify that the user is watching an IPTV video through the optical router; in a case that the optical router sends a SIP (Session Initiation Protocol) message, the optical gateway can identify that the user is making a voice call through the optical router. The optical gateway can also acquire parameters of the optical router for determining centralized scheduling through interaction between the PLOAM message and the OMCI message, that is, acquiring the wireless resources or cache resources of the optical router.

In an embodiment, the above compression module 1002 is further configured to enable the optical gateway to compress the downlink frame length to a first length range when the service type of the optical router is a latency-sensitive service.

The optical gateway dynamically adjusts the downlink frame length according to the service type of the optical router and the parameter for determining centralized scheduling. The parameter for determining centralized scheduling includes the wireless resources or cache resources of the optical router. For example, when the optical gateway identifies that the router has a latency-sensitive service, and in a case that the latency-sensitive service requires a latency of less than 80 us, then the optical gateway can adjust the downlink frame length to a first length range, such as 62.5 us, or shorter to adapt to the service scenario.

In an embodiment, the above compression module 1002 is further configured to enable the optical gateway to adjust the downlink frame length to a second length range when the wireless resources or cache resources of the optical router need to be scheduled centrally.

In a case that the optical gateway needs to centrally schedule the wireless resources and cache resources of the optical router, and the latency of centralized scheduling is required to be less than 20 us, then the optical gateway can adjust the downlink frame length to a second length range, such as 15.625 us or shorter, to perform centralized scheduling and management of optical router resources.

Based on the above steps, the above sending module 1004 is further configured to enable the optical gateway to send the compressed downlink frame length to the optical router through the target message, to instruct the optical router to de-frame the target message to obtain the compressed downlink frame length; wherein the target message includes one of the following: PLend field of the standard downlink frame, PON-ID field of the downlink frame, physical layer operations, administration and maintenance (PLOAM) message, and ONU management and control interface (OMCI) message.

The optical router searches the downlink frame synchronization domain for downlink frame synchronization. After synchronization, the compressed frame length information of the downlink frame may be acquired according to the frame length of the PLend field or the PON-ID field of the downlink frame header, and the GTC payload domain or the XGTC/FS payload domain is de-framed and recombined according to the frame length information, meanwhile, uplink burst control is performed according to the BWmap domain bandwidth information; and the compressed frame length information of the downlink frame and the superframe count information of switching of the downlink frame length can also be acquired according to the PLOAM or OMCI management message. When the superframe count time is reached, a master gateway and a slave gateway simultaneously switch the downlink frame lengths and the downlink frame de-framing algorithms.

In an embodiment, the above compression module 1002 is further configured to indicate the compressed downlink frame length through the ATM length indicating bit in the PLend field of the standard downlink frame when the target message includes the PLend field of the standard downlink frame.

The optical gateway can notify the optical router of the adjusted downlink frame length, that is, the compressed downlink frame length, through the ATM length in the PLend field of the downlink frame of the G984.3 standard.

In an embodiment, the above compression module 1002 is further configured to indicate the compressed downlink frame length through the Admintive label indicating bit in the PON-ID field of the downlink frame when the target message includes the PON-ID field of the downlink frame.

The optical gateway can also notify the optical router of the adjusted downlink frame length, that is, the compressed downlink frame length, through the Admintive label in the PON-ID field of the downlink frame of the G987.3 standard, the G9807.1 standard, and the G9804.2 standard.

In an embodiment, the above compression module 1002 is further configured to compress the downlink frame length through at least one of the following methods: compressing according to a preset ratio; and compressing according to the application scenario.

The downlink frame can be compressed proportionally or can be compressed by selecting a compression algorithm according to the application scenario. For example, a 125 us downlink frame can be divided into n subframes, and the frame length of each subframe after proportional compression is 125/n (us). When n is equal to 8, the subframe length 125/8 is equal to 15.625 us, the DBA scheduling cycle is 12.5 us to the minimum; each subframe can also be compressed not proportionally, and is designed according to the actual application scenario. For example, the frame length n1 (us) of the first subframe after compression, the frame length n2 (us) of the second subframe after compression......, n1+n2+...is equal to 125 us, and when n is equal to 8, the frame lengths of the subframes can be as follows: n1=12 us, n2=13 us, n3=14 us, n4=15 us, n5=16 us, n6=17 us, n7=18 us, n8=20 us or other combinations, and the DBA scheduling cycle matches with the compressed frame length.

In an embodiment, the above compression module 1002 is further configured such that for a standard downlink frame including a PCBd domain and a GTC payload domain, the optical gateway keeps the PCBd domain unchanged and compresses the GTC payload domain.

The downlink frame of the G.984.3 standard includes the PCBd domain and the GTC payload domain, wherein the PCBd domain remains unchanged when the downlink frame length is compressed, and the GTC payload domain is compressed to reduce the downlink frame latency. The compression algorithm is proportional compression, and the compressed frame length is 125/n (us); or, the downlink frame of the G.984.3 standard includes the PCBd domain and the GTC payload domain, the PCBd domain remains unchanged when the downlink frame length is compressed, and the GTC payload domain is compressed to reduce the downlink frame latency. The compression algorithm is designed according to actual application scenarios, and the compressed frame length is n1 (us), n2 (us), etc.

In an embodiment, the above compression module 1002 is further configured such that the optical gateway keeps the PSBd domain and the first XGTC/FS header domain unchanged and compresses the second XGTC/FS payload domain for standard downlink frames including the PSBd domain, the first XGTC/FS header domain and the second XGTC/FS payload domain.

The downlink frame of the G.987.3/G.9807.1/G.9804.2 standards includes the PSBd domain, the XGTC/FS header domain and the XGTC/FS payload domain. The PSBd domain and the XGTC/FS header domain remain unchanged when the downlink frame length is compressed. The XGTC/FS payload domain is compressed to reduce the downlink frame latency. The compression algorithm is proportional compression, and the compressed frame length is 125/n (us), or the downlink frame of the G.987.3/G.9807.1/G.9804.2 standards includes the PSBd domain, the XGTC/FS header domain and the XGTC/FS payload domain. The PSBd domain and the XGTC/FS header domain remain unchanged when the downlink frame length is compressed. The XGTC/FS payload domain is compressed to reduce the downlink frame latency. The compression algorithm is designed according to actual application scenarios, and the compressed frame length is n1 (us), n2 (us), etc.

It should be noted that each of the above modules can be implemented through software or hardware. The latter can be implemented in the following ways, but is not limited hereto: the above modules are all located in the same processor; or the above modules can be located in different processors in a form of any arbitrary combination.

Embodiments of the present invention further provide a computer-readable storage medium. A computer program is stored in the computer-readable storage medium, wherein the computer program is configured to execute the steps in any of the above method embodiments when running.

In an embodiment, the above storage medium may be configured to store a computer program for performing the following steps:
At S1: compressing, by an optical gateway, the downlink frame length according to target parameters, wherein the target parameters include at least one of the following: a service type of the optical router and a parameter for determining centralized scheduling; and
At S2: sending, by the optical gateway, the compressed downlink frame length to the optical router.

In an embodiment, the above computer-readable storage medium may include but is not limited to: a USB flash drive, a read-only memory (ROM for short), a random access memory (RAM for short), a mobile hard disk, a magnetic disk or an optical disk and other media that can store computer programs.

For specific examples in the present embodiment, reference may be made to the examples described in the above embodiments and exemplary implementations, and the present embodiment will not be repeated redundantly herein.

Embodiments of the present invention further provide an electronic apparatus. The electronic apparatus includes a memory and a processor, wherein a computer program is stored in the memory, and the processor is configured to run the computer program to perform the steps in any of the above method embodiments.

In an embodiment, the above processor may be configured to perform the following steps through a computer program:
At S1: compressing, by an optical gateway, the downlink frame length according to target parameters, wherein the target parameters include at least one of the following: a service type of the optical router and a parameter for determining centralized scheduling; and
At S2: sending, by the optical gateway, the compressed downlink frame length to the optical router.

In an embodiment, the above electronic apparatus may further include a transmission device and an input/output device, wherein the transmission device is connected to the above processor, and the input/output device is connected to the above processor.

For specific examples in the present embodiment, reference may be made to the examples described in the above embodiments and exemplary implementations, and the present embodiment will not be repeated redundantly herein.

Obviously, those skilled in the art should understand that the above modules or steps of the present invention may be implemented using general-purpose computing apparatus, and they may be concentrated on a single computing apparatus, or distributed across a network composed of multiple computing apparatus. They may be implemented with program codes executed by a computing apparatus, such that they may be stored in a storage apparatus for execution by the computing apparatus, and in some cases, the steps shown or described may be executed in a different order than herein, or they may be implemented by making them into individual integrated circuit modules separately, or by making a plurality of modules or steps therein into a single integrated circuit module. **In** this way, the present invention is not limited to any particular combination of hardware and software.

The above descriptions are merely preferred embodiments of the present invention and are not intended to limit the present invention. For those skilled in the art, the present invention may have various modifications and changes. Any modifications, equivalent substitutions, improvements and the like made within the principles of the present invention shall all fall within the protection scope of the present invention.

## Claims

1. A downlink frame length processing method, comprising:
compressing, by an optical gateway, the downlink frame length according to target parameters, wherein the target parameters comprise at least one of the following: a service type of an optical router and a parameter for determining centralized scheduling; and
sending, by the optical gateway, the compressed downlink frame length to the optical router.

2. The downlink frame length processing method according to claim 1, wherein the parameter for determining centralized scheduling comprises: wireless resources or cache resources of the optical router, and before compressing, by the optical gateway, the downlink frame length according to target parameters, the method further comprises at least one of the following:
determining, by the optical gateway, the service type of the optical router according to the type of the message protocol sent by the optical router; and
determining, by the optical gateway, the wireless resources or cache resources of the optical router according to physical layer operations, administration and maintenance, PLOAM, message or ONU management and control interface, OMCI, message.

3. The downlink frame length processing method according to claim 1, wherein the compressing, by the optical gateway, the downlink frame length according to target parameters comprises:
compressing, by the optical gateway, the downlink frame length to a first length range when the service type of the optical router is a latency-sensitive service.

4. The downlink frame length processing method according to claim 1, wherein the parameter for determining centralized scheduling comprises: wireless resources or cache resources of the optical router, and the compressing, by the optical gateway, the downlink frame length according to target parameters comprises:
adjusting, by the optical gateway, the downlink frame length to a second length range when the wireless resources or cache resources of the optical router need to be scheduled centrally.

5. The downlink frame length processing method according to claim 1, wherein the sending, by the optical gateway, the compressed downlink frame length to the optical router comprises:
sending, by the optical gateway, the compressed downlink frame length to the optical router through a target message, to instruct the optical router to de-frame the target message to obtain the compressed downlink frame length;
wherein the target message comprises one of the following: PLend field of the standard downlink frame, PON-ID field of the downlink frame, physical layer operations, administration and maintenance, PLOAM, message, and ONU management and control interface, OMCI, message.

6. The downlink frame length processing method according to claim 5, further comprising:
when the target message comprises the PLend field of the standard downlink frame, indicating the compressed downlink frame length through the ATM length indicating bit in the PLend field of the standard downlink frame.

7. The downlink frame length processing method according to claim 5, further comprising:
when the target message comprises the PON-ID field of the downlink frame, indicating the compressed downlink frame length through the Admintive label indicating bit in the PON-ID field of the downlink frame.

8. The downlink frame length processing method according to claim 1, wherein the compressing, by the optical gateway, the downlink frame length according to target parameters comprises at least one of the following:
compressing the downlink frame length according to a preset ratio; and
compressing the downlink frame length according to the application scenario.

9. The downlink frame length processing method according to claim 1, wherein the compressing, by the optical gateway, the downlink frame length according to target parameters comprises:
for a standard downlink frame comprising a PCBd domain and a GTC payload domain, keeping, by the optical gateway, the PCBd domain unchanged and compressing the GTC payload domain.

10. The downlink frame length processing method according to claim 1, wherein the compressing, by the optical gateway, the downlink frame length according to target parameters comprises:
for standard downlink frames comprising the PSBd domain, the first XGTC/FS header domain and the second XGTC/FS payload domain, keeping, by the optical gateway, the PSBd domain and the first XGTC/FS header domain unchanged, and compressing the second XGTC/FS payload domain.

11. An downlink frame length processing apparatus applied to an optical gateway, comprising:
a compression module configured to enable the optical gateway to compress the downlink frame length according to target parameters, wherein, the target parameters comprise at least one of the following: the service type of the optical router and a parameter for determining centralized scheduling; and
a sending module configured to enable the optical gateway to send the compressed downlink frame length to the optical router.

12. A computer-readable storage medium, wherein a computer program is stored in the storage medium, and the computer program is executed to implement the method described in any one of claims 1 to 10.

13. An electronic apparatus, comprising a memory and a processor, wherein a computer program is stored in the memory, and the processor is configured to run the computer program to perform the method described in any one of claims 1 to 10.
